# EUROPEAN PATENT SPECIFICATION

(11) **EP 0 296 837 B1**
(45) Date of publication and mention of the grant of the patent: **24.08.1994**
(21) Application number: 88305706.9
(22) Date of filing: 22.06.1988
(51) Int. Cl.: G06K 11/18

(54) **Input device possessing plural functions**
Eingabegerät mit mehreren Funktionen
Dispositif d'entrée possédant plusieurs fonctions

(30) Priority: 22.06.1987 JP 156224/87
(43) Date of publication of application: 28.12.1988
(73) Proprietor: SHARP KABUSHIKI KAISHA, Osaka 545 (JP)
(72) Inventor: Yamaguchi, Keiji, Nara-shi Nara-ken (JP)
(74) Representative: Brown, Kenneth Richard

(56) References cited:
- EP-A- 0 166 432

## Description

This invention relates to an input device, and more particularly to an input device for feeding information into personal computers or other electronic appliances.

An input device known as "mouse" is used as the coordinate input device in a personal computer. The mouse has a spherical rotating element accommodated in a housing, and the rotating element is turned by moving the housing on a surface with the rotating element directed outward from the bottom, and the amount by which the rotating element turns, the 'turning amount' is read by an encoder. The 'turning amount' being read in this way is divided into components in two orthogonal directions. The divided components become, vertical and horizontal input coordinates for example, for a cathode ray tube (CRT) of a personal computer.

An image reading device known as an image scanner is also used as an input device in a personal computer. An image scanner comprises, basically, means for detecting position in one direction, realised, for example, by a roller, and a reading device. The reading device is defined by the scanning amount of the image to be read, corresponding to the position dislocation amount detected by the position detecting means. The image read by the image reading device is delivered to a personal computer.

Conventionally, although it is often necessary to use both a mouse and an image scanner at the same time, there have been no input devices in which they are both held in one structure.

EP-A-0 166 432 describes a position and image generating unit. In normal operation, a position detection mode is adopted. However, when the unit is pressed downward an image scanning mode is activated.

It is an aim of this invention to present an input device capable of feeding information in plural manners.

It is another aim of this invention to present an input device capable of feeding both position information and image information.

It is a further aim of this invention to present an input device possessing the functions of both mouse and image scanner.

Other advantages and further scope of applicability of the present invention will become apparent from the detailed description given hereinafter. It should be understood however, that the detailed description of and specific example, while indicating preferred embodiments of the invention, are given by way of illustration only, since various changes and modifications within the scope of the invention will become apparent to those skilled in the art from this detailed description.

In accordance with the present invention, there is provided an input device comprising: a coordinate position means for outputting a signal indicative of x and y motion of the device along a surface, and image reading means both mounted within a housing; switch means disposed on said housing for selectively operating the device in first and second modes; and a cylindrical guide roller mounted on the housing, characterised in that the housing is shaped so as to be rotatable between first and second operative positions such that in the second position the image reading means is operatively positioned above said surface and the cylindrical guide roller stably contacts the surface and such that in the first position said housing can be operatively moved in an arbitrary x-y direction relative to said surface without said cylindrical guide roller contacting said surface.

In the input device of an embodiment of this invention, at least two functions can be arbitrarily selected, so that the input device can be utilized very advantageously.

The present invention will become more fully understood from the detailed description given hereinbelow and the accompanying drawings which are given by way of illustration only, and thus are not limitative of the present invention and wherein:
Fig. 1 is a longitudinal sectional view showing the composition of an input device 1;
Fig. 2 is a sectional view seen from cut section line II-II in Fig. 1;
Fig. 3 is a sectional view seen from cut section line III-III in Fig. 2.
Fig. 4 is a perspective view of the input device 1;
Fig. 5 is a block diagram showing a simplified electric composition of the input device 1;
Fig. 6 is a sectional view showing the composition of an input device la in an embodiment of this invention; and

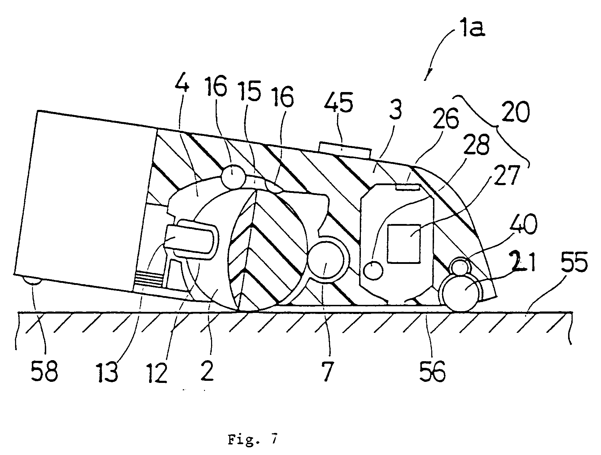

Fig. 7 is a sectional view for explaining the state of use of the input device 1a.

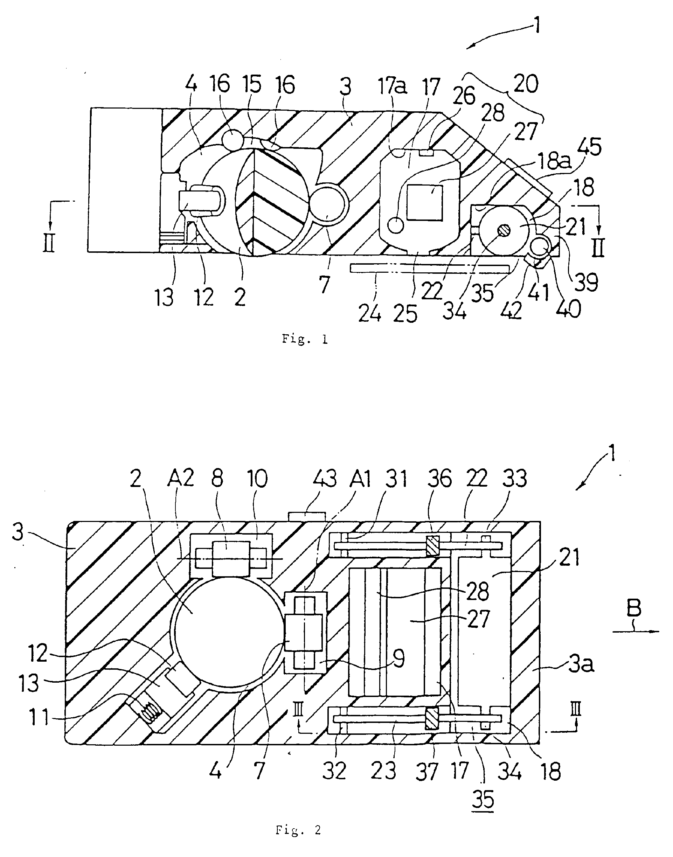

The composition of an input device 1 that does not form part of the claimed invention is described below while referring to Figs. 1 to 4.

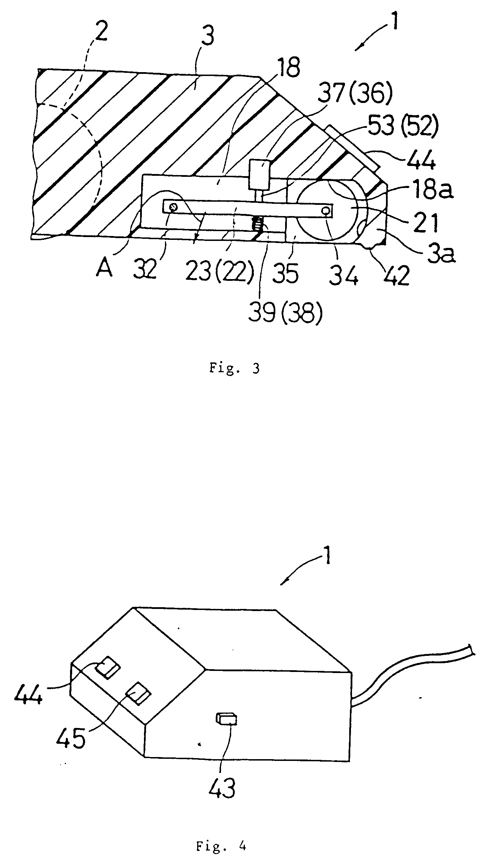

Fig. 1 is a longitudinal sectional view showing the composition of an input device 1, Fig. 2 is a sectional view seen from cut section line II-II in Fig. 1, Fig. 3 is a sectional view seen from cut section line III-III in Fig. 2, and Fig. 4 is a perspective view of the input device 1.

The input device 1 has a ball 2 which is a rotating element made of a material having a relatively large frictional coefficient, such as polyurethane, and this ball 2 is accommodated in a ball accommodating part 4 in a housing 3 made of, for example, synthetic resin. In the housing 3, moreover, encoder device accommodating parts 9, 10 for accommodating encoder devices 7, 8 are formed continuously with said ball accommodating part 4.

The encoder device accommodating part 9 is formed consecutively with the ball accommodating part 4 in the longitudinal direction of the housing 3 (in the lateral direction in Fig. 2). That is, an axis of rotation A1 of the encoder device 7 is orthogonal to said longitudinal direction of the housing 3. The axis of rotation A2 of the encoder device 8 is orthogonal to the axis of rotation A1 of the encoder 7. By the encoder devices 7, 8 being in such disposition, the component of 'turning amount' along said longitudinal direction in the rotary motion in an arbitrary direction of the ball 2, and the component of 'turning amount' in the direction orthogonal to the longitudinal direction can be individually detected.

In the housing 3, moreover, a pressure roller 12 for pressing the ball 2 by the spring force of a pressure spring 11 is supported on a bracket 13 continuously with said ball accommodating part 4.

An arc-shaped recess 15 is formed above the ball accommodating part 4, in Fig. 4, and a plurality of spheres 16 freely rotatable in arbitrary directions are buried at specified intervals in the circumferential direction of the ball 2. These spheres 16 are provided in order to prevent cancellation of sliding contact between the floor 55 and the ball 2 when the ball moves upward in the housing 3 due to pressing forces from the floor as the ball 2 is rotated in contact with the floor. In this way, the ball 2 is rotatably supported in the housing by two encoder devices 7, 8, pressure roller 12, and plural spheres 16.

At the right side of the ball accommodating part 4 in the housing 3 in Fig. 1, a reading device accommodating part 17 for accommodating a reading device 20 which is described later, a roller 21 and a roller accommodating part 18 for accommodating two support bars 22, 23 for supporting this roller 21 are provided. The roller accommodating part 18 is approximately U-shaped and surrounds the reading device accommodating part 17 in the section shown in Fig. 3.

The reading device accommodating part 17 comprises a reading window 25 for reading an original placed on the floor 55 beneath the input device 1 in Fig. 1, and at a position corresponding to this reading window 25 at an upper end 17a in Fig. 1, a photo detector array 26 is disposed. Between this photo detector array 26 and said reading window 25, an optical fibre array 27 is disposed, and a light source 28 for illuminating the original 24 through the reading window 25 is provided near the optical fibre array 27. The light source 28, the photo detector array 20 and optical fibre array 27 are combined to compose a reading device 20. Meanwhile, the reading window 25, photo detector array 26, optical fibre array 27 and light source 28 are disposed so that their longitudinal directions may respectively cross orthogonally with the longitudinal direction of said input device 1.

Each end of two support bars 22, 23 for supporting the roller 21 is fitted to shaft parts 31, 32 fixed on the housing 3 in a manner free to dislocate angularly. The roller 21 is supported at other ends of the two support bars 22, 23, in a manner free to dislocate angularly, by way of two shaft parts 33, 34 formed on said roller 21. An opening 35 directed downward in Fig. 1 is formed in the roller accommodating part 18, corresponding to the roller 21, so that the roller 21 can be projected outward from the housing 3 through this opening 35 as described below.

At the upper side in Fig. 3 near the central part in the longitudinal direction of said two support bars 22, 23, there are two electromagnetic plungers 36, 37 fixed on the housing 3 at the upper ends. At the lower side (in Fig. 3) of these two support bars 22, 23, there are two coil springs 38, 39 fixed on the housing 3 at one end, at the positions corresponding to said two electromagnetic plungers 36, 37. These two coil springs 38, 39 are biased by a spring to the upper side (in Fig. 3). Incidentally, while these two electromagnetic plungers 36, 37 are demagnetized, the roller 21 is held in the state abutting against the upper end 18a of the roller accommodating part 18 by the spring force of said two coil spring 38, 39 (hereinafter this state is referred to as the stopped state).

At the front head part 3a formed at the right side in Fig. 1 of the housing 3, an encoder device accommodating part 41 for accommodating an encoder device 40 is formed. This encoder device accommodating part 41 is formed consecutively with the roller accommodating part 18 in the longitudinal direction of the housing 3. That is, the rotation axial line of the encoder device 40 is disposed orthogonally to the longitudinal direction of the housing 3. While the roller 21 is in the stopped state, a specified spacing is kept between the roller 21 and the encoder device 40. At the lower end of said front head part 3a, a sliding protrusion 42 sliding against the floor (not shown) as described below is formed.

The input device 1, can thus, act as a mouse using the ball 2, and as an image scanner using the reading device 20. These two functions are changed over by a changeover switch 43 placed at the side wall of the housing 3. On the surface of the housing 3, there are two operation switches 44, 45 for use when the input device 1 functions as the mouse, so the personal computer to which the input device 1 is connected can be controlled.

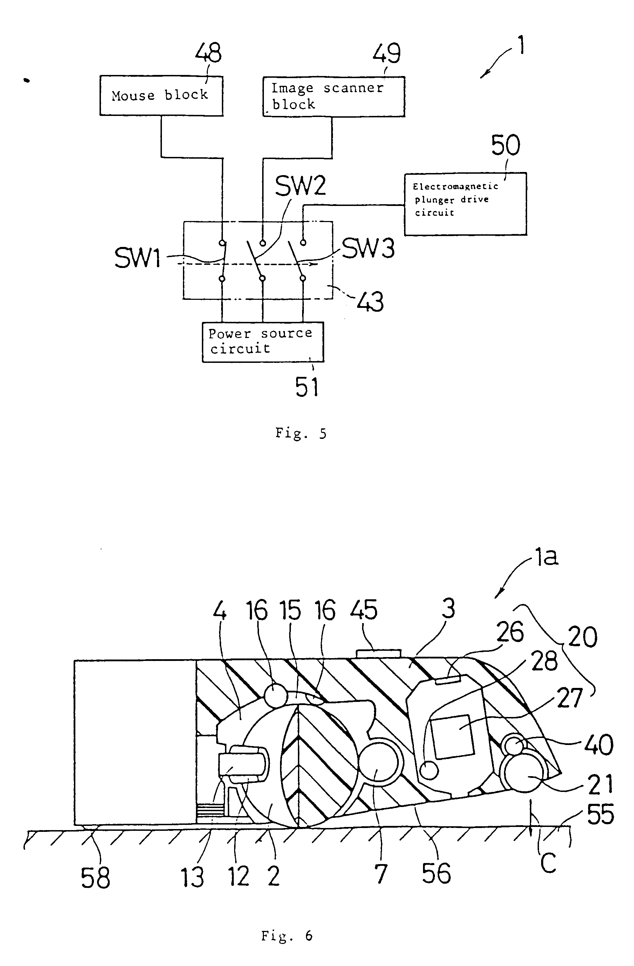

Fig. 5 is a block diagram showing a simplified electric composition of the input device 1. A mouse block 48 containing the electric composition functioning as the mouse, and an image scanner block 49 containing the electric composition functioning as the image scanner are connected to a power source circuit 51 through switches SW1, SW2 in said changeover switch 43, respectively. A drive circuit 50 for driving said two electromagnetic plungers 36, 37 is connected also to the power source circuit 51 through a switch SW3 in the changeover switch 43. In this changeover switch 43, two switches SW2, SW3 are composed so as to cooperate. For example, when the switch SW1 is in conductive state, the two switches SW2, SW3 both fall in the cut-off state, and when the switch SW1 is cut off, the two switches SW2, SW3 come into a conductive state.

In other words, when the changeover switch 43 is changed over to the mouse side, the switch SW1 is in conductive state, and the supply voltage from the power source circuit 51 is supplied to the mouse block 48, so that the input device 1 works as a mouse. On the other hand, when the changeover switch 43 is changed to the image scanner side, the two switches, SW2 and SW3, both come into conductive state, and the image scanner block 49 and the plunger drive circuit 50 are powered from the power source circuit 51 so that the input device 1 works as the image scanner.

When the changeover switch 43 is at the mouse side, the two electromagnetic plungers 36, 37 are both demagnetized, and the roller 21 is held in the stopped state, so that the input device 1 is supported on the floor by the sliding protrusion 42 and the ball 2.

When the input device 1 is pushed in this state, function as a mouse is realised. When the input device 1 is slid in an arbitrary direction on the floor, the ball 2 rotates in response, and this amount of turn is detected by two encoder devices 7, 8. Thus, when the input device 1 is operated as a mouse the displacement of the input device 1 is detected, and it is delivered to the personal computer.

When the changeover switch 43 is changed to the image scanner side, the two electromagnetic plungers 36, 37 are excited, and the actuators 52, 53 are displaced downward in Fig. 3. As a result, resisting the spring force of the coil springs 38, 39, the two support bars 22, 23 are angularly dislocated in the direction of arrow A around the shaft parts 32, 32, and the roller 21 is held in the state projected outward of the housing 3 from the opening (hereinafter this state is called the operating state).

When the roller 21 is in the operating state, the roller 21 abuts against the encoder device 40, and the encoder device 40 can detect the "turning amount" of the roller 21. Furthermore, when the roller 21 is in the operating state, the roller 21 is held in the state being slightly projected from the housing 3 over the sliding protrusion 42. In this state, therefore, the input device 1 is supported on the floor by means of the ball 2 and the roller 21.

When the input device 1 is thus changed over to the image scanner side, the roller 21 is lowered, and the displacement in the longitudinal direction of the input device 1 is can be detected through the encoder device 40. Accordingly, when the input device 1 is changed over to the image scanner side and moved in the direction of arrow B, the reading device 20 can sequentially operate on the original 24 depending on the displacement in the direction of arrow A detected through the roller 21, so that the function as the image scanner is realized.

Fig. 6 is a sectional view showing the composition of an input device la of an embodiment of this invention. This embodiment is similar to the device of Figures 1 to 4, and corresponding parts are identified with the same reference numbers.

The housing 3 has a taper surface 56 on the surface adjacent to the floor 55. The roller 21 is rotatably supported on the housing 3, and the encoder device 40 is disposed in a state abutting against this roller 21. A sliding protrusion 58 is formed on the housing at the end remote from said taper surface 56.

The centre of gravity of the input device is set between said sliding protrusion 58 and the ball 2. Therefore, in the absence of outside forces, this input device 1 is supported by the sliding protrusion 58 and ball 2 on the floor 55 as shown in Fig 6 and functions as a mouse when the changeover switch is switched to the mouse side.

When the input device 1 is angularly dislocated in the direction of arrow C around the ball 2 to keep in the state shown in Fig. 6 the input device la is supported by the ball 2 and roller 41 on the floor 55. In this state, when the changeover switch 43 is changed to the image scanner side and the input device la is pushed in the longitudinal direction (direction of arrow B), the displacement is detected by the encoder device 40, and the reading device 20 can read an original placed on the floor 55 at a position that corresponds to the displacement, so that function as an image scanner is realised.

Thus, without using an elevating mechanism for the roller 21 it is possible to switch between the functions to detect the change in the "turning amount" of the roller 21 in the image scanner mode, that is, the displacement of the input device la in the longitudinal direction, in a simple composition.

Thus, in the embodiment, function as a mouse and function as an image scanner can be both provided in one input device, and these two functions are changed over by the changeover switch. Therefore, the utility as an input device is extremely improved.

According to the described embodiment, since plural functions can be changed by the changeover means, one input device can possess plural functions, and its utility is superbly enhanced.

While only one embodiment of the present invention has been described, it will be apparent to those skilled in the art that various changes and modifications may be made therein without departing from the scope of the present invention as claimed.

## Claims

1. An input device (1a) comprising:
a coordinate position means (2, 7, 16) for outputting a signal indicative of x and y motion of the device along a surface, and image reading means (20) both mounted within a housing (3);
switch means (45) disposed on said housing (3) for selectively operating the device in first and second modes;
and a cylindrical guide roller (21) mounted on the housing (3), characterised in that the housing (3) is shaped so as to be rotatable between first and second operative positions such that in the second position the image reading means (20) is operatively positioned above said surface and the cylindrical guide roller (21) stably contacts the surface and such that in the first position said housing (3) can be operatively moved in an arbitrary x-y direction relative to said surface without said cylindrical guide roller (21) contacting said surface.

2. An input device according to claim 1 wherein when said housing (3) is placed in said second rotational position, operative motion of said housing (3) is restricted to a direction perpendicular to the rotational axis of said roller (21).

## Patentansprüche

1. Eingabegerät (1a) mit:
einer Koordinatenstellungseinrichtung (2, 7, 16) zum Ausgeben eines eine x- oder y-Bewegung des Geräts über eine Oberfläche angebenden Signals und einer Bildleseeinrichtung (20), welche beide in einem Gehäuse (3) befestigt sind;
einem in dem Gehäuse (3) untergebrachten Schalter (45) zum selektiven Betreiben des Geräts in einer ersten und einer zweiten Betriebsart;
und einer im Gehäuse (3) befestigten zylindrischen Führungswalze (21), **dadurch gekennzeichnet,** daß das Gehäuse (3) so gestaltet ist, daß es zwischen einer ersten und einer zweiten Betriebsstellung schwenkbar ist, so daß die Bildleseeinrichtung (20) in der zweiten Betriebsstellung auf der Oberfläche betriebsbereit positioniert ist und die zylindrische Füh- rungswalze (21) in festem Kontakt mit der Oberfläche steht, und daß das Gehäuse (3) in der ersten Betriebsstellung in eine willkürliche x-y-Richtung relativ zu der Oberfläche bewegbar ist, ohne daß die zylindrische Führungswalze (21) die Oberfläche berührt.

2. Eingabegerät nach Anspruch 1, **dadurch gekennzeichnet,** daß, wenn das Gehäuse (3) in der zweiten Schwenkstellung steht, die Bewegungsrichtung des Gehäuses (3) auf eine Richtung senkrecht zu der Drehachse der Walze (21) beschränkt ist.

## Revendications

1. Dispositif d'entrée (1a) comprenant:
un moyen de position de coordonnées (2, 7, 16) pour délivrer en sortie un signal indicatif d'un déplacement en x et y du dispositif le long d'une surface, et un moyen de lecture d'image (20) montés tous deux dans un boîtier (3);
un moyen à interrupteur (45) disposé sur ledit boîtier (3) pour faire fonctionner de façon sélective le dispositif dans des premier et second modes;
et un rouleau formant guide cylindrique (21) monté sur le boîtier (3), caractérisé en ce que le boîtier (3) est conformé afin de pouvoir être déplacé en rotation entre des première et seconde positions fonctionnelles de telle façon que, dans la seconde position, le moyen de lecture d'image (20) est positionné fonctionnellement au-dessus de ladite surface et le rouleau formant guide cylindrique (21) est en contact de manière stable avec la surface et de telle façon que, dans la première position, ledit boîtier (3) peut être déplacé fonctionnellement dans une direction x-y arbitraire relativement à ladite surface sans que ledit rouleau formant guide cylindrique (21) ne soit en contact avec ladite surface.

2. Dispositif d'entrée selon la revendication 1 dans lequel lorsque ledit boîtier (3) est placé dans ladite seconde position de rotation, un déplacement fonctionnel dudit boîtier (3) est limité à une direction perpendiculaire à l'axe de rotation dudit rouleau (21).
